# NEUE EUROPÄISCHE PATENTSCHRIFT

(11) **EP 1 934 011 B2**
(45) Veröffentlichungstag und Bekanntmachung des Hinweises auf die Entscheidung über den Einspruch: **06.10.2021**
(45) Hinweis auf die Patenterteilung: 24.08.2011
(21) Anmeldenummer: 06792088.4
(22) Anmeldetag: 15.09.2006
(51) Int. Cl.: B23K 1/00, B23K 3/06

(54) **VORRICHTUNG ZUR HARTLOT-APPLIKATION**
DEVICE FOR APPLYING HARD SOLDER
DISPOSITIF D'APPLICATION DE METAL D'APPORT DE BRASAGE FORT

(30) Priorität: 16.09.2005 DE 102005044499
(43) Veröffentlichungstag der Anmeldung: 25.06.2008
(73) Patentinhaber: Emitec Gesellschaft für Emissionstechnologie mbH, 53797 Lohmar (DE)
(72) Erfinder: WIERES, Ludwig, 51491 Overath (DE)
(74) Vertreter: Rössler, Matthias
(86) Internationale Anmeldenummer: PCT/EP2006/009007
(87) Internationale Veröffentlichungsnummer: WO 2007/031331

(56) Entgegenhaltungen:
- EP-A2- 1 156 196
- US-A1- 2002 129 890

## Beschreibung

Die vorliegende Erfindung betrifft eine Vorrichtung zur Applikation von Hartlot auf eine zumindest teilweise strukturierte Metallfolie. Die Vorrichtung kann zum Beispiel Anwendung im Bereich der Herstellung von metallischen Abgasbehandlungseinheiten, die mit einer Mehrzahl von zumindest teilweise strukturierten Metallfolien aufgebaut sind, finden.

Zur Herstellung derartiger Abgasbehandlungseinheiten werden die glatten und/oder strukturierten Metallfolien aufeinander gestapelt und miteinander verwunden bzw. gewickelt und in ein Gehäuse eingefügt. Für eine lange Lebensdauer in einer Abgasanlage eines Fahrzeugs ist es erforderlich, dass fügetechnische Verbindungen zwischen den Metallfolien untereinander bzw. zwischen den Metallfolien und dem Gehäuse stabil ausgeführt sind. Hierfür haben sich grundsätzlich Hartlöt- und/oder Schweißverbindungen als geeignet erwiesen.

Im Zusammenhang mit dem Hartlöten immer weiter entwickelter Wabenkörper stellen sich bei der Applikation des Hartlots immer wieder technische Probleme. So muss zum einen gewährleistet sein, dass das Hartlot genau an den Stellen positioniert ist, an denen letztendlich eine fügetechnische Verbindung ausgeführt werden soll. Des weiteren ist jedoch auch sicherzustellen, dass eine übermäßige Anhäufung von Hartlot vermieden wird, da es bei der anschließenden thermischen Behandlung zu unerwünschten Diffusionsvorgängen zwischen Hartlot und den metallischen Komponenten des Wabenkörpers kommen kann, die negative Auswirkungen auf die Lebensdauer der Metallfolie haben können.

Die Zufuhr von Hartlot zu den Metallfolien kann bereits vor dem Winden bzw. Wickeln zu einer Wabenstruktur erfolgen, beispielsweise in dem Hartlot-Streifen und/oder Hartlot-Pasten aufgetragen werden. Darüber hinaus ist bekannt, die fertig gebildete Wabenstruktur stirnseitig mit (insbesondere pulverförmigen) Hartlot zu versehen. Schließlich ist es auch noch bekannt, mittels einem so genannten Aufdruckverfahren ("Inkjet") Hartlot auf vorbestimmte Teilbereiche der Oberfläche der Metallfolien zu platzieren.

Aus der US-A1-2002/0129890 ist ein Verfahren zum Aufbringen von Klebemittel und Lotmaterial auf strukturierten Folien eines Wabenkörpers bekannt. Diese strukturierten Folien weisen Wellentäler und Wellenberge auf, wobei Klebemittel auf einem Teil der Wellenberge in ersten Zonen, die sich vollständig über jeweilige Wellenberge erstrecken, aufgebracht wird. Zudem ist aus der US-A1-2002/0129890 bekannt, Klebemittel auf einem weiteren Teil der Wellenberge in zweiten Zonen vorzusehen, wobei die zweiten Zonen sich nur über einen Teil eines jeweiligen Wellenberges erstrecken.

Aus der EP-A2-1 156 196 ist ein Verfahren zum Herstellen eines Katalysatorträgers für ein Abgasreinigungssystem bekannt, bei dem Wickelbänder aus wenigstens einer gewellten oder geriffelten Bahn und mindestens einer ebenen Bahn aus rostfreiem Stahl hergestellt werden, die zwischen sich Verbindungshilfsmittel halten, um einen Zylinder zu bilden. Die Verbindungshilfsmittel weisen eine Breite auf, die schmaler als die der gewellten und ebenen Bahnen ist, wobei die gewellten und ebenen Bahnen abwechselnd angeordnet sind. Die Verbindungshilfsmittel sind ferner innerhalb der Seitenenden der gewellten Bahn weg von Vorsprüngen angeordnet, die an den Seitenenden der gewellten Bahn während der Herstellung der gewellten Bahn durch ein Paar gezahnter Räder ausgebildet wurden. Hierbei weisen die Verbindungshilfsmittel eine Stärke auf, die größer als eine Höhe der Vorsprünge ist. Der Zylinder wird anschließend zur Ausbildung von Diffusionsverbindung mit den gewellten und ebenen Bahnen erwärmt.

Hiervon ausgehend ist es Aufgabe der vorliegenden Erfindung, die mit Bezug auf den Stand der Technik geschilderten technischen Probleme zumindest teilweise zu lösen. Insbesondere soll eine Vorrichtung zur Applikation von Hartlot angegeben werden, bei dem in einer präzisen und einer für eine Serienfertigung geeigneten Weise Hartlot auf Teilbereiche der Metallfolien positioniert werden kann.

Diese Aufgaben werden gelöst mit einer Vorrichtung gemäß den Merkmalen des Patentanspruchs 1. Weitere vorteilhafte Ausgestaltungen der Erfindung sind in den jeweils abhängig formulierten Patentansprüchen beschrieben.

Gemäß der vorliegenden Erfindung wird eine Vorrichtung zur Applikation von Hartlot auf eine zumindest teilweise strukturierte Metallfolie vorgeschlagen, die zumindest folgende Elemente aufweist:
- wenigstens eine Folienzufuhr für mindestens eine flache Metallfolie,
- wenigstens eine Umformeinheit zur diskontinuierlichen Erzeugung einer Struktur in der mindestens einen Metallfolie,
- wenigstens eine Positionierungseinheit zur diskontinuierlichen Applikation von Hartlot hin zur mindestens einen Metallfolie,
wobei Synchronisationsmittel zur Abstimmung der Bewegungen der wenigstens einen Umformeinheit und der wenigstens einen Positionierungseinheit vorgesehen sind.

Die Folienzufuhr kann beispielsweise Förderbänder, Zahnräder bzw. Zahnstangen, Leitschienen und ähnliches umfassen, muss aber nicht zwingend ein integrales Bauteil der Umformeinheit und/oder der Positionierungseinheit sein. Bei der Umformeinheit ist bevorzugt ein Biege- bzw. Stanzanlage gemeint, bei der intermittierend bestimmte Teilabschnitte der flachen Metallfolie mit einer Struktur versehen werden. Insbesondere sind hiermit keine kontinuierlich arbeitenden Wälzanlangen mit ineinander greifenden Wälzrädern gemeint.

Die Positionierungseinheit appliziert das Hartlot vorteilhafterweise mit der gleichen Taktfrequenz, wie die Umformeinheit die Struktur in die mindestens eine Metallfolie einbringt. Die Synchronisationsmittel können auch Teile einer Steuerung, Software, eines Regelkreises oder einer Datenverarbeitungsanlage umfassen.

Dabei ist es jedoch bevorzugt, dass die Synchronisationsmittel eine mechanische Koppeleinrichtung umfassen. Die mechanische Koppeleinrichtung wirkt sowohl auf die Umformeinheit als auch auf die Positionierungseinheit, so dass eine synchronisierte Bewegung beider Einheiten gewährleistet ist. Dies führt dazu, dass mit relativ geringem technischen Aufwand die Applikation von Hartlot während der Herstellung der Struktur durchgeführt wird, was zu einer exakten und zeitlich verkürzten Applikation von Hartlot führt.

Weiterhin ist bevorzugt, dass bei der Vorrichtung zumindest eine Klebeeinrichtung oder eine Schweißeinrichtung zum Aufbringen des Hartlotes vorgesehen ist. Regelmäßig wird die alternative Ausführung der Vorrichtung mit einer Klebeeinrichtung oder einer Schweißeinrichtung ausreichend sein, unter Umständen ist jedoch auch eine Kombination beider Einrichtungen sinnvoll. Mittels der Klebeeinrichtung bzw. der Schweißeinrichtung wird das Hartlot auf der Metallfolie vorfixiert, so dass das Hartlot während des anschließenden Transports die Position bezüglich der Metallfolie nicht mehr verändert.

Gemäß einer weiteren Ausgestaltung der Vorrichtung ist die wenigstens eine Umformeinheit eine Hubstanzanlage und die Synchronisationsmittel bewirken ein gemeinsames Verfahren von Hubstanzanlage und Positionierungseinheit. Dabei ist bevorzugt, dass die Hubstanzanlage und die Positionierungseinheit eine translatorische Bewegung, insbesondere eine Hubbewegung, hin zur Metallfolie ausführen, wobei diese Bewegung gleichzeitig ausgeführt wird.

Die Erfindung sowie deren technisches Umfeld werden anhand der beigefügten Figuren näher erläutert. Es ist darauf hinzuweisen, dass die Figuren schematisch besonders bevorzugte Ausführungsbeispiele der Erfindung zeigen, die Erfindung jedoch nicht darauf begrenzt ist. Es zeigen:
- Fig. 1:: den Aufbau einer Vorrichtung zur Applikation von Hartlot,
- Fig. 2:: ein Detail der Vorrichtung zur Applikation von Hartlot,
- Fig. 3:: eine mit Hartlot versehene, strukturierte Metallfolie,
- Fig. 4:: ein Verfahren zum Ablauf zur Herstellung eines Wabenkörpers, und
- Fig. 5:: ein Fahrzeug umfassend eine Abgasbehandlungseinheit.

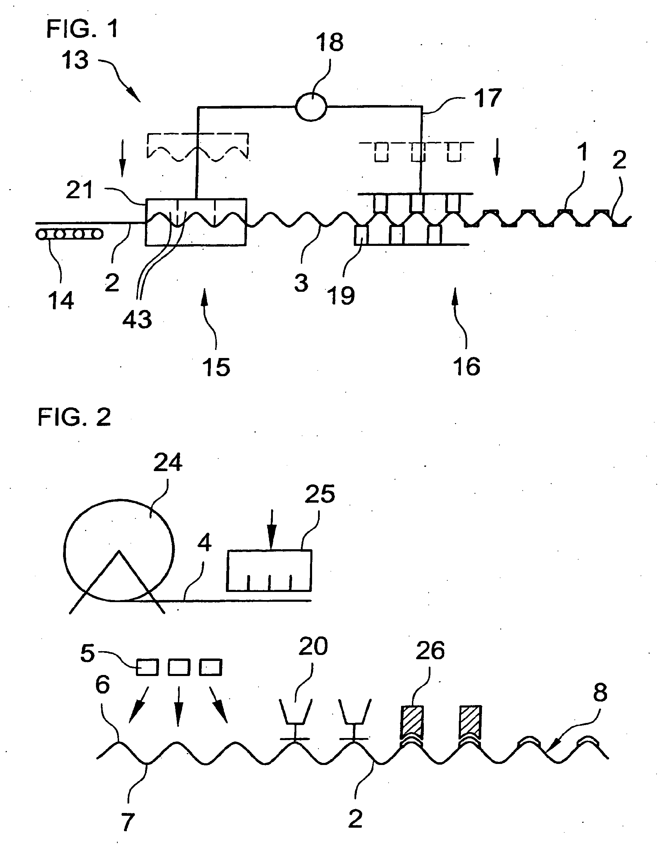

Die in Fig. 1 schematisch dargestellte Vorrichtung 13 zur Applikation von Hartlot umfasst eine als Förderband ausgeführte Folienzufuhr 14, mit der eine glatte Metallfolie 2 hin zur Umformeinheit 15 bewegt wird. Mittels der Umformeinheit 15, die hier als Hubstanzanlage 21 ausgeführt ist, wird eine Struktur 3 in die Metallfolie 2 eingebracht. Hierzu führt die Hubstanzanlage 21 eine Hubbewegung aus, wie dies durch die gestrichelte Anfangsposition und den Pfeil veranschaulicht ist. Dabei ist die Hubstanzanlage 21 mit mehreren Stempeln 43 ausgeführt, die regelmäßig zeitversetzt während einem Umformschritt arbeiten. So beginnt bevorzugt der Stempel 43, der an die letzte Struktur 3 anschließt und anschließend formen einzeln die daran anliegenden Stempel 43 um. Damit ist sichergestellt, dass ausreichend Material der Metallfolie 2 für den Umformvorgang in die Hubstanzeinlage 21 eingezogen werden kann.

Unmittelbar im Anschluss daran gelangt die mit der Struktur 3 versehene Metallfolie 2 hin zur Positionierungseinheit 16. Wie dies gestrichelt und mit einem Pfeil angedeutet wurde, führt die Positionierungseinheit 16 die gleiche Hubbewegung aus, was mit Hilfe von Synchronisationsmitteln 17 bewerkstelligt wird. Bei der hier dargestellten Ausführungsvariante umfassen die Synchronisationsmittel 17 einen Koppeleinrichtung 18. Gleichzeitig mit dem Anbringen des Hartlotes 1 auf die Metallfolie 2 wird mit Hilfe einer Klebeeinrichtung 19 eine Vorfixierung des Hartlots 1 vorgenommen. Die mit Hartlot 1 versehene Metallfolie 2 kann anschließend zur Weiterverarbeitung transportiert werden.

Fig. 2 zeigt, wie das Hartlot vorbereitet und der Metallfolie 2 zugeführt wird. Dabei ist das Hartlot hier als Hartlot-Folie 4 bereitgestellt, die von einer Spule 24 abgerollt wird. Diese Hartlot-Folie 4 wird anschließend einer Trennwerkzeug 25 zugeführt, welches aus der Hartlot-Folie 4 eine Mehrzahl von Hartlot-Etiketten 5 generiert. Die Hartlot-Etiketten 5 entsprechen z. B. genau der Hartlot-Menge, die zur Anbindung einzelner Erhebungen 6 bzw. Senken 7 der Metallfolie 2 erforderlich ist. Diese Hartlot-Etiketten 5 werden also den Erhebungen 6 von einer Seite 8 der Metallfolie 2 zugeführt und anschließend mittels einer Schweißeinrichtung 20 auf den Erhebungen 6 vorfixiert. Anschließend werden die Hartlot-Etiketten 5 mittels eines Anpresswerkzeuges 26 an die Struktur der Wellfolie 2 angepasst, so dass sich diese an die Erhebungen 6 bzw. Senken 7 im wesentlichen anschmiegen. Es ist darauf hinzuweisen, dass die Schritte Anbringen, Vorfixieren und Anpressen unter Umständen teilweise mit einem Werkzeug gleichzeitig ausgeführt werden können.

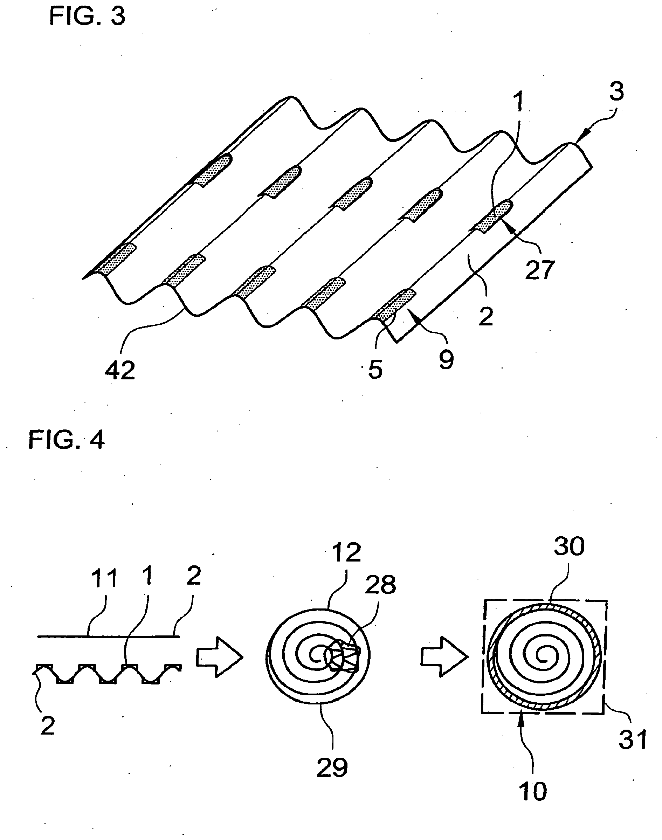

Fig. 3 zeigt nun in einer perspektivischen Darstellung eine Metallfolie 2 mit einer Struktur 3, wobei in vorbestimmten Teilbereichen 9 Hartlot-Etiketten 5 positioniert wurden. Die ersten Teilbereiche 9 sind dabei nahe der Kante 42 der Metallfolie 2 positioniert. Darüber hinaus wird in innen liegenden Teilbereichen, die hier mit Vertiefungen 27 (oder Taschen) ausgeführt sind, ebenfalls Hartlot 1 appliziert. Die Bereitstellung von solchen Vertiefungen 27 gewährleistet, dass das Hartlot 1 (beispielsweise auch bei Kontakt dieser strukturierten Metallfolie 2 mit einer daran abgleitenden Metallfolie) in den gewünschten Teilbereichen bleibt, wobei gegebenenfalls hier auf eine Vorfixierung verzichtet werden kann.

Fig. 4 veranschaulicht nun die Herstellung eines Wabenkörpers 10, der nach Art einer Spirale mit einer glatten Metallfolie 2 und einer strukturierten Metallfolie 2 aufgebaut ist. Grundsätzlich ist anzumerken, dass sich hiermit auch andere Arten von Wabenkörpern 10 herstellen lassen, beispielsweise bei denen die Metallfolien 2 zunächst gestapelt und anschließend evolventenförmig oder S-förmig verwunden werden. Bei der hier gezeigten Ausführungsvariante wird also die glatte Metallfolie 2 auf die strukturierte Metallfolie 2 gelegt, so dass das an den Erhebungen und Senken positionierte Hartlot 1 mit Abschnitten 11 des glatten Metallbandes 2 in Kontakt kommt. Diese Lage wird anschließend spiralförmig aufgewickelt, so dass sich, wie hier dargestellt, eine zylindrische Wabenstruktur 12 bildet. Die hier von einer Stirnseite 29 betrachtete Wabenstruktur 12 bildet nun mit der glatten und der strukturierten Metallfolie 2 im wesentlichen axial verlaufende, parallele Kanäle 28. Diese Wabenstruktur 12 wird nun in ein Gehäuse 30 eingefügt, das zur Fixierung dient. Darüber hinaus kann das Gehäuse 30 ebenfalls mit Hartlot versehen sein, so dass bei einer nachträglichen thermischen Behandlung in einem Ofen 31 (z.B. bei über 1000°C und unter Vakuum) fügetechnische Verbindungen zwischen den Metallfolien 2 und dem Gehäuse 30 sowie zwischen den Metallfolien 2 untereinander ausgebildet werden.

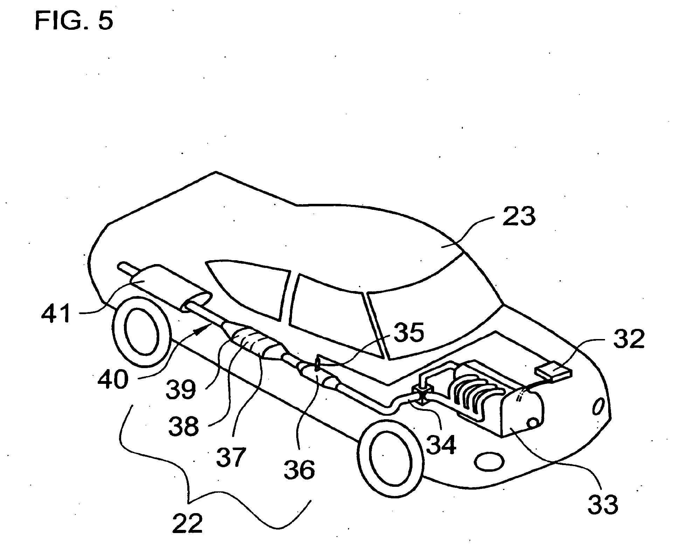

Fig. 5 veranschaulicht nun ein besonders bevorzugtes Einsatzgebiet derartiger Wabenkörper 10 als Abgasbehandlungseinheit 22. Gezeigt ist ein Fahrzeug 23, welches eine mittels einer Motorsteuerung 32 betriebene Verbrennungskraftmaschine 33 umfasst. Die Motorsteuerung 32 kann beispielsweise unter Berücksichtigung von in der Abgasanlage 40 installierten Messfühlern 35 die Betriebsweise der Verbrennungskraftmaschine 33 beeinflussen. Das mit der Verbrennungskraftmaschine 33 erzeugte Abgas wird über eine Abgasleitung 34 mehreren Abgasbehandlungseinheiten 22 zugeführt, die alle einen entsprechenden metallischen Wabenkörper 10 aufweisen. In Strömungsrichtung des Abgases durchströmt das Abgas zunächst einen Oxidationskatalysator 36, dann eine Partikelfalle 37, einen Adsorber 38 und einen weiteren katalytischen Konverter 39. Schließlich durchströmt es noch einen Schalldämpfer 41 bevor es an die Umgebung gereinigt abgegeben wird.

Mit der hier beschriebenen Erfindung lässt sich das Hartlot ohne separaten Arbeitsschritt auftragen, wobei gleichzeitig ein gezielte Aufbringung für ein genau vorbestimmtes Lötmuster und ein minimaler Einsatz von Hartlot erreicht wird. Dies führt zu einem beachtlichen Zeit- und Kostennutzen im Rahmen einer Serienfertigung von metallischen Abgasbehandlungseinheiten für Kraftfahrzeuge.

### Bezugszeichenliste

- 1: Hartlot
- 2: Metallfolie
- 3: Struktur
- 4: Hartlot-Folie
- 5: Hartlot-Etikett
- 6: Erhebung
- 7: Senke
- 8: Seite
- 9: Teilbereich
- 10: Wabenkörper
- 11: Abschnitt
- 12: Wabenstruktur
- 13: Vorrichtung
- 14: Folienzufuhr
- 15: Umformeinheit
- 16: Positionierungseinheit
- 17: Synchronisationsmittel
- 18: Koppeleinrichtung
- 19: Klebeeinrichtung
- 20: Schweißeinrichtung
- 21: Hubstanzanlage
- 22: Abgasbehandlungseinheit
- 23: Fahrzeug
- 24: Spule
- 25: Trennwerkzeug
- 26: Anpresswerkzeug
- 27: Vertiefung
- 28: Kanal
- 29: Stirnseite
- 30: Gehäuse
- 31: Ofen
- 32: Motorsteuerung
- 33: Verbrennungskraftmaschine
- 34: Abgasleitung
- 35: Messfühler
- 36: Oxidationskatalysator
- 37: Partikelfalle
- 38: Adsorber
- 39: Konverter
- 40: Abgasanlage
- 41: Schalldämpfer
- 42: Kante
- 43: Stempel

## Patentansprüche

1. Vorrichtung (13) zur Applikation von Hartlot (1) auf eine zumindest teilweise strukturierten Metallfolie (2) zumindest aufweisend:
- wenigstens eine Folienzufuhr (14) für mindestens eine flache Metallfolie (2),
- wenigstens eine Umformeinheit (15) zur diskontinuierlichen Erzeugung einer Struktur (3) in der mindestens einen Metallfolie (2),
- wenigstens eine Positionierungseinheit (16) zur diskontinuierlichen Applikation von Hartlot (1) hin zur mindestens einen Metallfolie (2),
wobei Synchronisationsmittel (17) zur Abstimmung der Bewegungen der wenigstens einen Umformeinheit (15) und der wenigstens einen Positionierungseinheit (16) vorgesehen sind.

2. Vorrichtung (13) nach Anspruch 1, bei der die Synchronisationsmittel (17) eine mechanische Koppeleinrichtung (18) umfassen.

3. Vorrichtung (13) nach Anspruch 1 oder 2, bei der zumindest eine Klebeeinrichtung (19) oder eine Schweißeinrichtung (20) zum Aufbringen des Hartlotes (1) vorgesehen ist.

4. Vorrichtung (13) nach einem der Ansprüche 1 bis 3, bei der die wenigstens eine Umformeinheit (15) eine Hubstanzanlage (21) ist und die Synchronisationsmittel (17) ein gemeinsames Verfahren von Hubstanzanlage (17) und Positionierungseinheit (16) bewirken.

## Claims

1. A device (13) for applying brazing solder (1) to an at least partially structured metal foil (2) at least having:
- at least one foil supply (14) for at least one flat metal foil (2),
- at least one shaping unit (15) for the discontinuous generation of a structure (3) in the at least one metal foil (2),
- at least one positioning unit (16) for the discontinuous application of brazing solder (1) to the at least one metal foil (2),
with synchronizing means (17) for coordinating the movements of the at least one shaping unit (15) and of the at least one positioning unit (16) being provided.

2. The device (13) as claimed in claim 1, in which the synchronizing means (17) comprise a mechanical coupling device (18).

3. The device (13) as claimed in claim 1 or 2, in which at least one adhesive bonding device (19) or one welding device (20) for applying the brazing solder (1) is provided.

4. The device (13) as claimed in one of claims 1 to 3, in which the at least one shaping unit (15) is a reciprocating punching system (21) and the synchronizing means (17) bring about a common movement of the reciprocating punching system (17) and positioning unit (16).

## Revendications

1. Dispositif (13) d'application de matériau d'apport de brasage fort (1) sur une feuille métallique (2) au moins partiellement structurée, présentant au moins :
- au moins un apport de feuille (14) pour au moins une feuille métallique plate (2),
- au moins une unité de transformation (15) pour la génération discontinue d'une structure (3) dans l'au moins une feuille métallique (2),
- au moins une unité de positionnement (16) pour l'application discontinue de matériau d'apport de brasage fort (1) sur l'au moins une feuille métallique (2),
des moyens de synchronisation (17) pour la coordination des mouvements de l'au moins une unité de transformation (15) et de l'au moins une unité de positionnement (16) étant prévus.

2. Dispositif (13) selon la revendication 1, dans le cas duquel les moyens de synchronisation (17) comprennent une installation de couplage mécanique (18).

3. Dispositif (13) selon la revendication 1 ou 2, dans le cas de laquelle au moins une installation de collage (19) ou une installation de soudage (20) étant prévus pour l'application du matériau d'apport de brasage fort (1).

4. Dispositif (13) selon l'une des revendications 1 à 3, dans le cas duquel l'au moins une unité de transformation (15) est une installation (21) d'estampage à va-et-vient et les moyens de synchronisation (17) provoquent un procédé commun d'installation d'estampage à va-et-vient (17) et d'unité de positionnement (16).
